# EUROPEAN PATENT SPECIFICATION

(11) **EP 1 357 533 B1**
(45) Date of publication and mention of the grant of the patent: **04.07.2007**
(21) Application number: 00993889.5
(22) Date of filing: 25.08.2000
(51) Int. Cl.: G09F 21/04, B60R 13/00, H04B 7/26

(54) **INTEGRATED SYSTEM FOR ELECTRONIC SPREADING OF PUBLICITY IN PUBLIC TRANSPORTATION UNITS (SIDEPUTP)**
INTEGRIERTES SYSTEM ZUM ELEKTRONISCHEN VERBREITEN VON WERBEMASSNAHMEN IN ÖFFENTLICHEN TRANSPORTEINHEITEN (SIDEPUTP)
SYSTEME INTEGRE D'AFFICHAGE ELECTRONIQUE D'ANNONCES PUBLICITAIRES DANS DES UNITES DE TRANSPORT PUBLIC

(43) Date of publication of application: 29.10.2003
(73) Proprietor: Sanchez Gonzalez, Elena, Escazu, San Jose (CR)
(72) Inventor: Sanchez Gonzalez, Elena, Escazu, San Jose (CR)
(74) Representative: Grünecker, Kinkeldey, Stockmair & Schwanhäusser Anwaltssozietät
(86) International application number: PCT/CR2000/000002
(87) International publication number: WO 2002/017286

(56) References cited:
- ES-A- 2 073 980
- FR-A- 2 616 572
- FR-A- 2 743 963
- GB-A- 2 306 857
- US-A- 6 060 993

## Description

Technical sector to which this invention belongs: this invention is related to the communication sector, specifically it has to do with a system for advertisement ads to be placed on and remotely operated on all kinds of public transportation vehicles, using an satellite signal.

Technology known before: regarding technology known before we can quote the Spanish Patent number P9002892, which describes an installation for the presentation of information and\or advertisements, as well as the Spanish patent number P9300386. which makes reference to a screen visualization circuit to display advertisement images. There are also known within this field of technology an infinite number of advertisement signs, of many kinds, such as stationary signs, television sets, stationary signs on vehicles, with fixed ads, or changing signs with mechanical or electronic mechanisms like electronic screens, amongst others. There are also the ads used on highways and stadiums, fixed or changing. The mechanism to change the ad can be of a mechanical nature, such as the motor mechanism, which spins a kind of chain so that each ad is presented up front, the other kind is the electronic with led kind of lights commanded by a computer, which gives the order to vary the message, which goes thru the screen from left to right or top to bottom or any other variation. There is also the television set system commanded by a centralized VHS system, or by the commercial television signal. There are elements that are very similar with different applications that issue data signals or images to fixed screens or television sets.

Divulgation of the invention: This request varies in technique and application with those known to this date, achieving through the use of satellite signals, to command commercial video and audio signals that will be received by a device in the type of a screen or monitor located atop of the vehicle as well as inside, being able to send signals at any time and for the durations established as a prepaid commercial, giving versatility and great coverage to the ads which will go around the streets on the public transportation vehicles thus providing an important novelty. It introduces an ingenious improvement of its physical shape and techniques, since it uses a series of elements that working together introduces an improvement into the state of the technique.

With this new invention, we present a different concept to what advertisement refers to, since it is implemented on vehicles, specially on those that render a public transportation service, which allows us to expand the coverage of publicity and to innovate the technology used in advertisement up to this date, in this competitive, versatile, ingenious sector, thus achieving a unique impact in the way that publicity reaches all potential consumers, since it offers an esthetic and aerodynamic advantage it can be installed on any motor vehicle, and by being this vehicle in constant movement, It accomplishes its main objective with a lot more efficiency, which is to divulge advertisement information and reach the entire population and country.

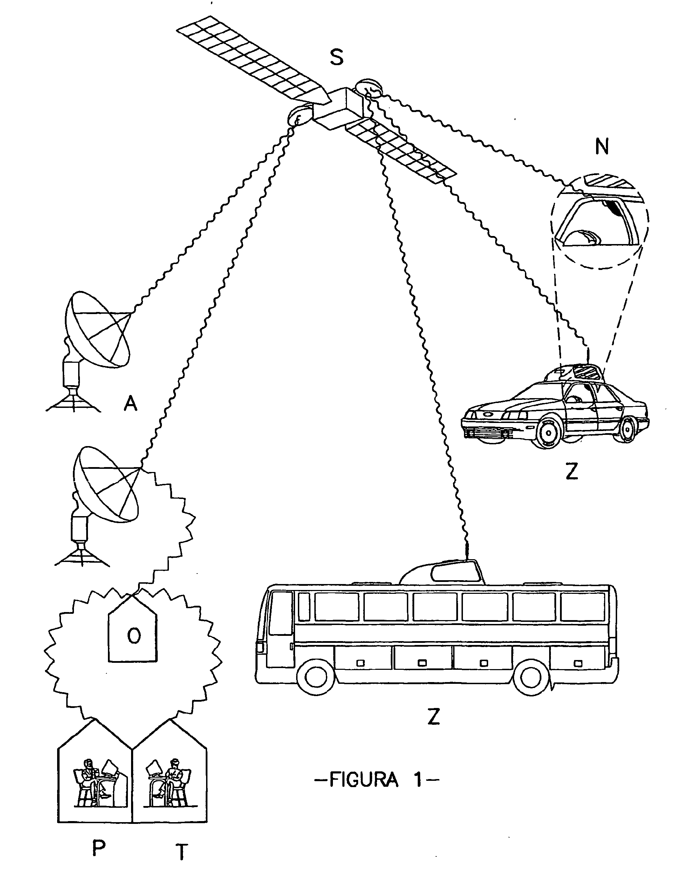

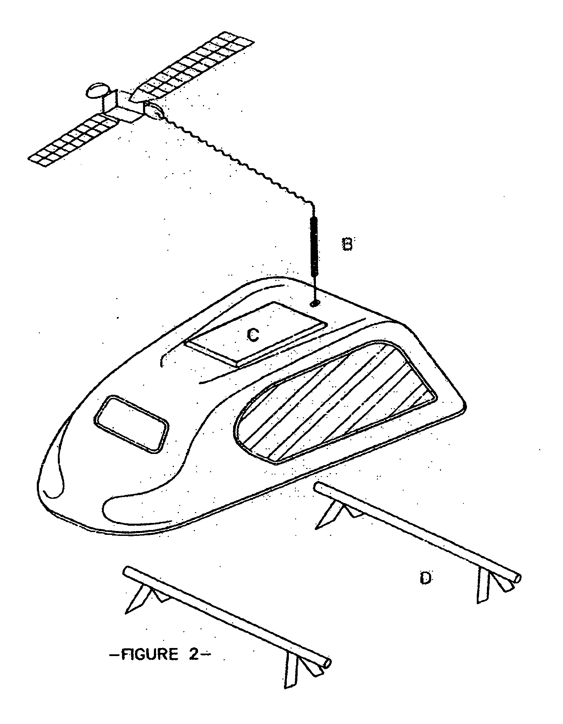

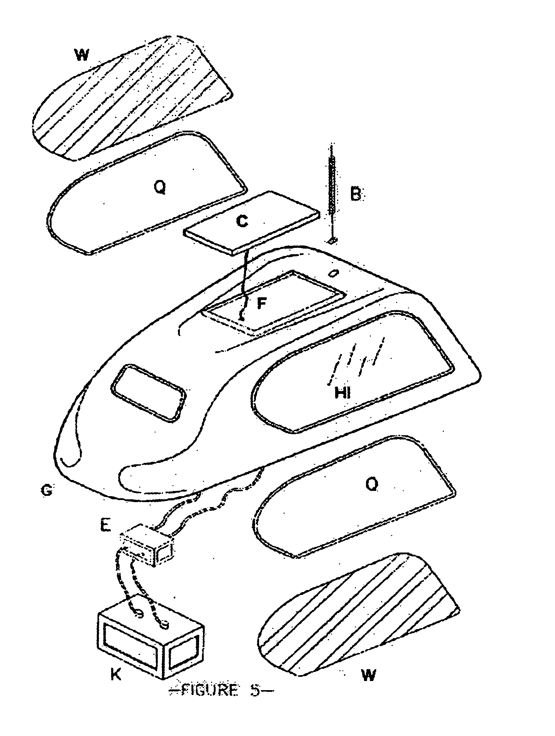

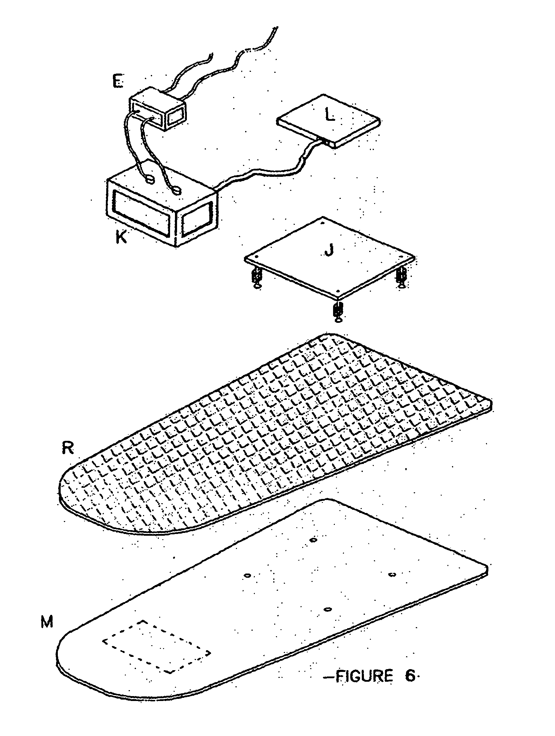

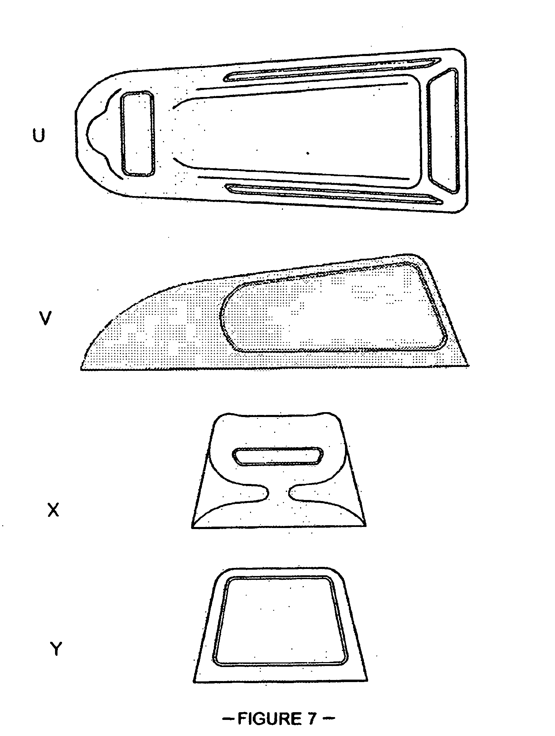

This invention consists of a television signal reception system that will be used on all kind of vehicles with the goal of publicity divulgation; its main characteristic is its aerodynamic structure design (Fig 2), that can be built using materials such as fiberglass, carbon fiber or any other similar material, consistent of four openings or windows, one frontal and one rear, (Fig 7) which may be of any dimension and shape, and two side windows. Into each one of the side windows there will be a projection screen, or of cathode rays, plasma, liquid crystal or any other known kind (Fig.5), which will visualize and deploy the advertisement images in a way similar to a television set or a similar visualization device and a third screen, of smaller dimensions, that is located in the internal part of the cabin of the vehicle (Fig.1). The screens will be adhered to the structure using a polymer material, which will work as a shock absorber against vibrations or impacts, thus avoiding stress on them and consequently their rupture. Additionally it diminishes the stress built by the constant temperature changes, which cause the expansion or contraction of the frame structure. The side screens have a protective shield built of a high resistance material, so that in this way it will make it difficult or impede their rupture or deterioration. (Fig. 6).

This structure or reception module has a fixation system that will attach to the top of the vehicle, which can be a metal structure or rack (Fig. 2) or anything similar, which allows an easy installation and at the same time it guarantees a safe adhesion to the vehicle, assuring that it will not come off. This module comes with a video-audio signal receiver for VHF or UHF frequency, made up by an antenna that receives the electromagnetic signal. It will be designed according to the type of signal it will receive, to insure an optimal reception of the signal. This design can vary in accordance to the international and local regulations, and it must also comply with any international standard regarding decoding and demodulation, range and/or band frequency, protocol and signal processing allowed for these advertisement purposes.

This system must receive, stabilize, filter, demodulate and decode, as well as to carry out any other electronic process, it also has a controller circuit that defines and executes all of the above mentioned steps, while at the same time is able to control the visualization monitors.

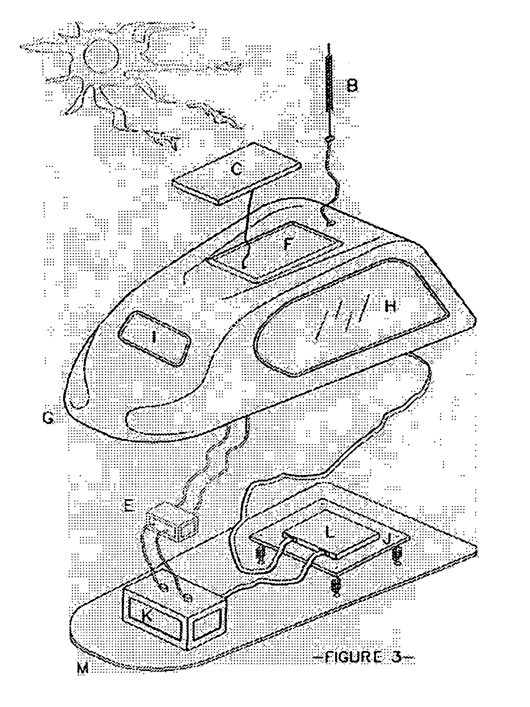

The device will additionally have the ability to canalize the received signal, so that different ads can be displayed on separate screens at the same time or the same ad on all screens. In addition, this system has a monitor located inside the vehicle's cabin (Fig. 1) so that the advertisements can be viewed and listened to by the passenger or passengers, being able to be tuned to any of the two existing and predetermined channels. The device must have a direct current feed using an accumulator and/or a battery of its own, which comes with a recharging system based on solar panels or photocells (Fig. 3), which is fixed to the upper part of the module of external visualization or by way of the vehicle's own generating system. It additionally contains the circuitry and shield to eliminate or diminish any kind of electromagnetic interference (EMI), especially of those created by the use of communication radios frequently used on taxis, trucks or any other mean of automotive transportation, as well as any other type of radiation that might affect the normal operation of the system. The shield may consist of a metal net or sheet or any other known device designed to such effect (Fig. 6).

The system will also have an added built in circuitry for the processing of the audio contained within the received signal, which also has a volume regulator, controlled remotely by an satellite signal or manually using the vehicles own system. It is necessary that the module, as well as any peripheral parts, have a shock absorbing system that will avoid or diminish the impact or vibrations caused by the vehicle's mechanism (Fig. 3).

This shock absorber system can be built of springs, synthetic material, foam or any similar materials.

The advertisements will be transmitted from a central station to the device installed on the vehicle using a compatible signal transmitting unit, and synchronized with the receiver, composed of a central source by the use of a satellite, with the goal of reaching a determined geographical area. The system will have a wireless bi-directional communication system, in accordance to known systems, such as the Bluetooth, which will have a maximum transmission power of +20db (100mw) with which it will have the ability to communicate with another computer within a 100 meters range. This circumstance will allow the system to exchange information with computers in gas stations and/or authorized service centers for the SIDEPUTP.

The system will have a function monitoring subsystem, which will be able to sense the system's operation and determine where a fault has been produced. When this happens, SIDEPUTP creates a report and saves it in its memory, and additionally it will use a visual aid to notify the driver. The driver will then have to attend an authorized technical service center. While there, SIDEPUTP will communicate with the service center computer using the Bluetooth subsystem, which will print out the report of the fault.

SIDEPUTP will also communicate with the computers at the gas stations so that it can send the information regarding the timings of the publicity ads.

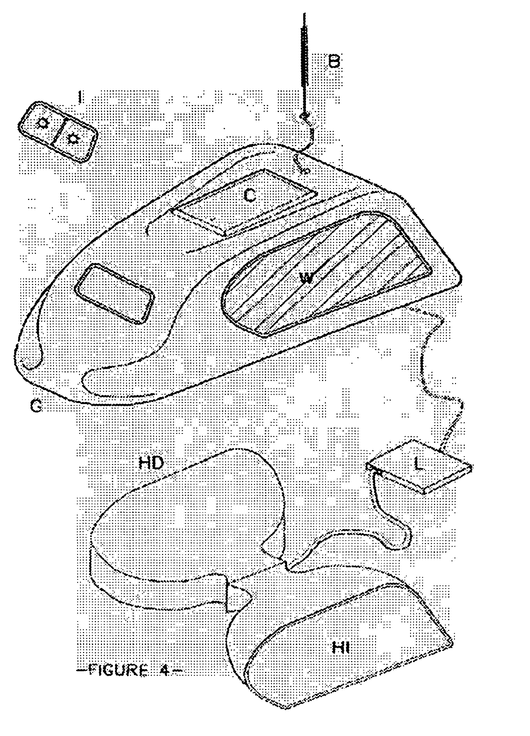

This integrated system will have an external visual aid located in the window or on the empty front panel of the structure, consistent of two indicators that can be indicators of the type of led lights or incandescent coils of red and green colors (Fig. 4), which will be controlled by the central system of the module and that will be activated by the driver of the vehicle so that when there are passengers inside the vehicle the red light will indicate that it is in service and the green light will indicate that it is available.

### Description of the drawings:

S - Satellite
A - Cellular transmission antenna
O - Office
P - Programming room
T - Transmission room
Z - Receiver
N - Internal screen extension
Figure 2
S - Satellite
B - Receiver Antenna
C - Solar Panel
D - Support frame or racks
Figure 3
8 - Receiver antenna
E - Electronic system for the directing of the energy flow from the photocell to the battery
C - Solar Panel
F - Solar Panel Adjustment
G - Prototype Body
H- Transmitting side screen
I - Busy or available signal lights
J - Spring Shock absorbers
K - Battery
L - Board or microchips
M - Foam Shock absorber
Figure 4
B - Receiver antenna
I - Busy or available signal lights
C - Solar Panel
W - Protection Glass
G - Prototype body
HD - Right Transmission screen
HI - Left Transmission screen
L - Board or microchips
Figure 5
B - Receiver antenna
C - Solar Panel
F - Solar Panel Adjustment
G - Prototype body
W - Protection Glass
HI - Left Transmission screen
E - Electronic system for the directing of energy flow from the photocell to the battery
K - Battery
Q - Polymer for the adhesion of the screen
Figure 6
E - Electronic system for the directing of energy flow from the photocell to the battery
L - Board or microchips
K - Battery
J - Spring shock absorbers
R - Radiation shield circuitry
M - Foam shock absorber
Figure 7
U - Top view of the device structure
V - Right side view
X - Frontal view
Y - Rear view
Figure 8
Block diagram of the main system
Figure 9
Block diagram of the dedicated computer
Figure 10
Block diagram of the Audio & Video

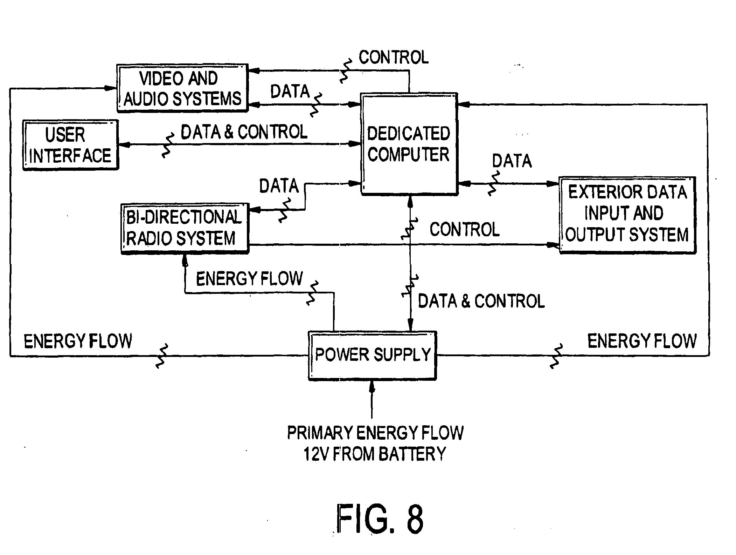

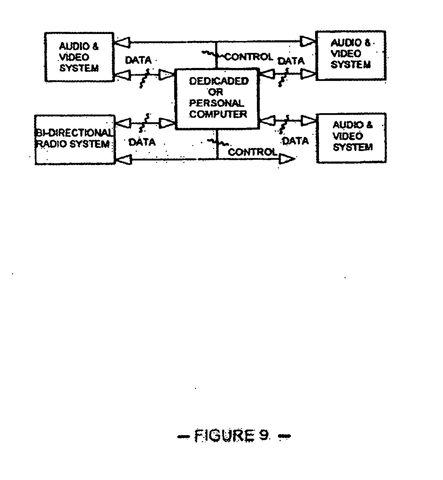

Description of the operation of the SIDEPUTP system: This system consists of a dedicated computer (Fig. 8), which controls the whole system; an interface system for the user, to allow access and control to the user, also it will have a bi-directional radio communication system, which will send a positioning signal and a service request signal, as well as a blocking command by the central station, a smart power source (Fig. 8) with charger and battery that will feed the entire system; the audio and video system (Fig. 8 and 9) for the divulgation of publicity, consisting of two big external screens of liquid crystal, projection or cathode rays, plasma or any other kind known, to be placed as previously described, with a reception system and an audio and video signal processing system (Fig. 8 and 9), with tuning controllable by the computer; internally a small liquid crystal screen with a commercial audio system; an input-output system (Fig. 8), and control commands from and towards the external world. Description of the dedicated computer, the dedicated computer will basically consist of one or more microprocessors, Rom memory, which will have the BIOS program, Flash memory, to handle data and access codes, cd-rom controller services, serial UART ports, video, keyboard and mouse drivers, as well as all the drivers that a basic personal computer has, as well as its operational configuration. Additionally, it will contain the appropriate controller devices for data input and output and from all the other systems for which it will be designed. It will have a liquid crystal screen (LCD) for the user with the intention of facilitating its operation, which is completely apart from the divulgation of publicity. It may also have the possibility that this monitor might be a user touch sensitive screen; a membrane keyboard, Mouse or touch sensitive screen.

Main functions: Power supply monitoring and control: The computer (Fig. 8 and 9) will be able to monitor and control the smart charger and power supply system so that it can control the energy flow to the entire system, apart from being able to control the system's power on and power off switch. Depending on the status of the accumulator, the computer will execute the adequate functions to control the power supply. During continuous time intervals the computer will request status reports from the power supply, or at any time, the power supply will send an interruption signal to the computer requesting to be controlled in case of an emergency. The computer (Fig. 8 and 9) will be able to detect any terminal failure of the system and of the power supply and it will be able to and will store all important information in the FLASH memory before the energy levels reach their minimum acceptable limits, therefore, important information may be protected before functions are interrupted by a power failure.

Allowing user access and control: By way of data command lines the user (in this case the driver) will be able to control the computer, and in this way he/she will have access to the majority of the functions that will be reserved solely to the use by the computer and others for the exclusive use by technical service personnel and/or service station personnel. The user will be able to access the functions and control the system. The computer will receive the user's commands and based on this will select the channels to be displayed on the divulgation screens.

Divulgation time counter The system will be capable of keeping track of the divulgation time by screen and by ad. This information will become available using the wireless BLUETOOTH system between the SIDEPUTP and the computer in the gas station. Once the counter has provided the information, it will start with an new counting sequence, nevertheless, all of the information will be kept in a space within the FLASH memory, which can only be accessed by authorized technical or service personnel. This with the intention of later performing statistical and marketing analysis. Control of the "BLUETOOTH" wireless communication system: The computer will control the system that is dedicated to the sending and receiving of basic information using radio frequency signals (RF), using to this effect a BLUETOOTH system.

Control of the audio and video divulgation system: By way of control signals one can tune each audio and video receiver and in addition one can select which screen will display each channel or if a single channel will be displayed on all three screens (two big external screens and a small internal one).

It can also control the audio volume of the message displayed on the small screen to accommodate the passenger's desires.

Audio and video system description (Fig. 8 and 9): It is basically consistent of two identical and independent systems, which will be in charge of displaying the advertisement images on the two external screens, apart from two audio receiver systems, which will not be used externally. These two audio signals will be multiplexed using an audio multiplexor to be able to have the audio of only one of the channels to the inside of the vehicle. Likewise, with the use of a video multiplexor one of the two channels will be chosen to be seen to the inside of the vehicle. To better explain what a multiplexor does, it blocks one of the two inputs and it allows the passing of the second one, according to the computer's command signals.

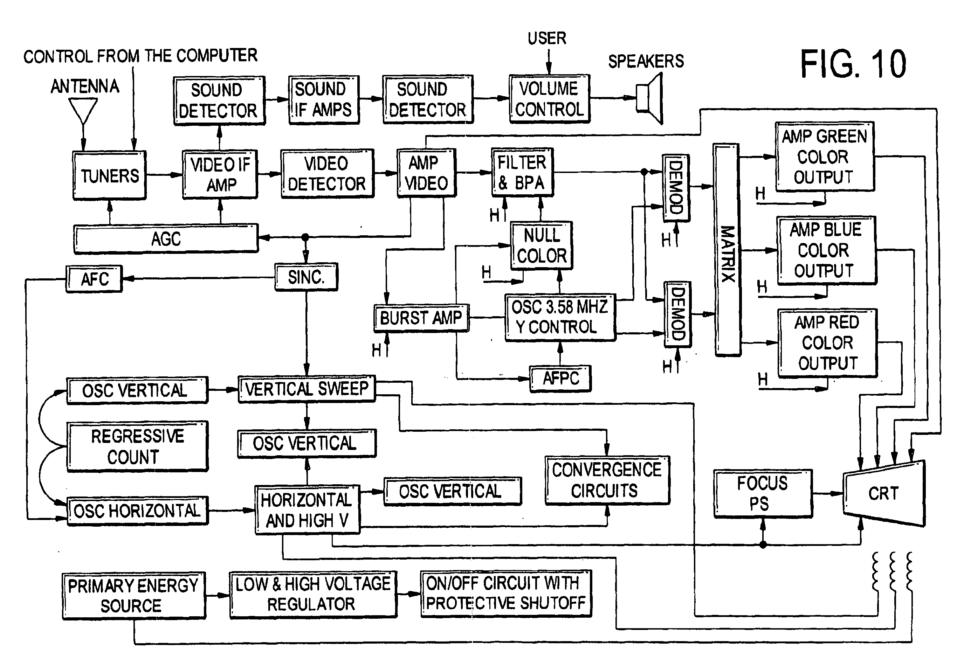

Description of the basic functions of each system block:
Antenna: It's the means through which the circuit receives the electromagnetic signal. It will be designed depending on the type of signal it will receive to insure the most optimal signal reception. This design can vary, according to local and international regulations.
Tuner (2 frequencies): this circuitry will have the task of filtering the unwanted signals, so that we may obtain and reproduce only the desired signal at an intermediate frequency (IF).
IF Amps (Intermediate Frequency Amplifiers): These have the task of maintaining the signal at the desired bandwidth.
Automatic Gain control: This system will control and adjust the gain of the IF Amps to maintain a proper and constant output from them. To achieve this, the AGC (Automatic Gain Control) will monitor the incoming signal as well as the output coming from the amplifiers, according to those levels, it will control their gain and accomplish the previous statement. With the preceding, we will maintain a steady IF signal regardless if the signal received through the antenna is weak or strong.
Sound Detector This circuit will obtain the audio information from the IF signal, in other words, it will detect and split this signal to later process it.
Video Detector. In the same way as in the previously described stage, this one will have the task of obtaining the video information (Fig. 8 and 9) from the IF signal, in other words, it will detect and split this signal after it has been processed.
Audio Processor/digital convener. As in the previously described stage, this circuitry will have the responsibility of cleaning the video signal to later convert it from analogue to digital so that it may be multiplexed and then processed to obtain a high quality image in the external screens.
Audio Processor/digital converter: It will have the responsibility of cleaning the audio signal to later convert it from analogue to digital so that it may be multiplexed and then processed to obtain high quality sound inside the vehicle.
Video Processor/digital converter: Just as in the previously described stage, it will have the task of cleaning the video signal to later convert it from analogue to digital so it can be multiplexed to obtain high quality video on the external screens.
Video controller. It will process the digital video information and control the screens. This controller will be able to control any screen type selected.
External screens: They have the task of massively displaying the advertisement images to the public.
Audio-video multiplexors: As it had previously been described, these devices, following the computers commands, will block one of the signals to let the other one through. In this way, the channel to be displayed inside the vehicle can be selected. As mentioned in the previous paragraphs, inside the vehicle, the passenger will have the option of selecting the channel and controlling the volume for it (Fig. 10).
Audio and video controller It processes the digital audio and video information and it controls the liquid crystal screen inside the vehicle as well as the audio amplifiers.
Internal screen and speakers: they show the passenger(s) of the vehicle the high quality video and audio of the channel selected by him.

The logic operation of this system consists that by way of a satellite, to send two signals of different frequencies with advertisement images and sound. The system inside the vehicle will receive both signals but the computer will have the option, with the control of the driver, to select which channel will be displayed on each screen, so he/she may select both channels (one on each external screen) or one channel on both. If the driver changes the channel, the computer will not execute the change until the ad currently being transmitted finishes. Internally the passenger will be able to select what he/she wants to see and the audio volume (Fig. 10). Thus, the system will count and register the time each company's ad or any other type of ad is divulged. It is Important to state that the payment of the publicity ad will be done by payment of fuel. The vehicle's system and the gas station computer will communicate, the latter generating a ticket with the drivers profit on gas based on the divulgation time of each ad, therefore, the payment is made in kind, meaning fuel.

When the driver enters a gas station, he must select the option of communicating with the computer using the Bluetooth system on both devices. Using an encrypted exchange of information (to avoid piracy and fraud) the gas station's computer generates a report on divulgation time. Then the information is transferred from the gas station to the controlling company's office using a modem to bill the company for the divulgation time and perform the statistical and marketing research.

The system will have a self-diagnostic module, which will signal the vehicle's driver if any fault on the system is found. The driver will take the vehicle to an authorized service provider, where, with the use of the Bluetooth system the device will communicate with of the above-mentioned service station and thus transmit the malfunctioning report.

## Claims

1. An integrated system to electronically divulge advertisements on public transportation units, **characterized by**:
a) A central station for programming, emission, and transmission Via satellite signal, to emit two signals with different advertising messages.
b) A receiver device installed in public transportation vehicles, featuring a dedicated computer that receives satellite signals by way of a special antenna, decodes the signals, and reproduces them in audio and video format on display monitors.
c) Various gas stations specially outfitted with computers that can communicate with the dedicated computer installed in the vehicle, by way of a wireless communications system, in order to receive all information relating to message display times, and subsequently convert said data into fuel credits for the vehicle in question, as well as relay the display time reports to the central station.

2. An integrated system to electronically divulge advertisements on public transportation units, in accordance with Claim 1, featuring a central station for programming and transmission, from which two advertising messages are sent simultaneously by way of coded satellite signals to the receiver devices installed in public transportation vehicles.

3. An integrated system to electronically divulge advertisements on public transportation units, in accordance with Claim 1, featuring a device for receiving, decoding, and reproducing satellite signals, to be installed In public transportation vehicles, with said device featuring a special antenna for capturing satellite signals, as well as the capability to use a wireless communications system that uses radio frequency signals with a maximum transmitting power of +20dB (100mW).

4. An integrated system to electronically divulge advertisements on public transportation units, in accordance with Claim 1, with the receiver device featuring a dedicated computer for managing the satellite signals, advertising messages, and display records, with said computer to contain one or more microprocessors, RAM memory with BIOS program, FLASH memory, a UART-type serial port, a wireless communications system, and capacity to monitor the power supply provided by an intelligent energy charging and supply system (Fig. 8 and 9).

5. An integrated system to electronically divulge advertisements on public transportation units, in accordance with Claim 1, with the receiver device featuring audio and video display system controls that allow the tuning selection of each audio and video receiver circuit, as well as the selection of which monitor is to display which channel, along with all components needed for such purposes: gain adjustment control for the amplifiers, sound detector; video detector, audio processor and digital converter, video processor and digital converter (Fig. 10).

## Patentansprüche

1. Integriertes System zum elektronischen Verbreiten von Werbung an öffentlichen Verkehrsmitteln, **gekennzeichnet durch** :
a) eine zentrale Station zum Programmieren, Ausstrahlen und Senden über Satelliten-Signal, die zwei Signale mit verschiedenen Werbenachrichten ausstrahlt,
b) eine Empfängervorrichtung, die in öffentlichen Verkehrsmitteln installiert ist und einen Spezialcomputer aufweist, der Satelliten-Signale über eine spezielle Antenne empfängt, die Signale decodiert und sie in Ton- und Bild-Format auf Anzeigemonitoren wiedergibt,
c) verschiedene Tankstellen, die speziell mit Computern ausgerüstet sind, die mit dem in dem Fahrzeug installierten Spezialcomputern über ein Drahtlos-Kommunikations-System kommunizieren können, um alle Informationen zu empfangen, die sich auf Nachrichten-Anzeigezeiten beziehen, und die anschließend die Daten in Kraftstoff-Guthaben für das betreffende Fahrzeug umwandeln und die Anzeigezeit-Berichte zu der Zentralstation weiterleiten.

2. Integriertes System zum elektronischen Verbreiten von Werbung an öffentlichen Verkehrsmitteln nach Anspruch 1, das eine zentrale Station zum Programmieren und Senden aufweist, von der zwei Werbenachrichten simultan über codierte Satelliten-Signale zu den Empfängervorrichtungen gesendet werden, die in öffentlichen Verkehrsmitteln installiert sind.

3. Integriertes System zum elektronischen Verbreiten von Werbung an öffentlichen Verkehrsmitteln nach Anspruch 1, das eine Vorrichtung zum Empfangen, Decodieren und Wiedergeben von Satelliten-Signalen aufweist, die in öffentlichen Verkehrsmitteln zu installieren ist, wobei die Vorrichtung eine spezielle Antenne zum Auffangen von Satelliten-Signalen sowie die Fähigkeit aufweist, ein Drahtlos-Kommunikations-System zu nutzen, das Funkfrequenz-Signale mit einer maximalen Sendeleistung von +20dB (100mW) nutzt.

4. Integriertes System zum elektronischen Verbreiten von Werbung an öffentlichen Verkehrsmitteln nach Anspruch 1, wobei die Empfängervorrichtung einen Spezialcomputer zum Verwalten der Satelliten-Signale, Werbenachrichten und Anzeige-Protokolle aufweist und der Computer einen oder mehrere Mikroprozessoren, RAM-Speicher mit BIOS-Programm, FLASH-Speicher, eine serielle Schnittstelle vom UART-Typ, ein Drahtlos-Kommunikations-System enthält und die Fähigkeit hat, den zugeführten Strom mit einem intelligenten Energie-Lade-und-Zuführsystem (Fig. 8 und 9) zu überwachen.

5. Integriertes System zum elektronischen Verbreiten von Werbung an öffentlichen Verkehrsmitteln nach Anspruch 1, wobei die Empfängervorrichtung Steuereinrichtungen des Ton-und-Bild-Anzeigesystems, die die Abstimmungs-Auswahl jeder Ton-und-Bild-Empfängerschaltung sowie die Auswahl dahingehend steuert, welcher Monitor welchen Kanal anzeigt, zusammen mit allen Komponenten aufweist, die für diese Zwecke benötigt werden, d.h. Verstärkungs-Einstell-Steuerung für die Verstärker, Ton-Detektor, Bild-Detektor, Ton-Prozessor und digitalen Wandler, Bild-Prozessor und digitalen Wandler (Fig. 10).

## Revendications

1. Système intégré pour afficher de façon électronique des annonces publicitaires sur des unités de transport public, **caractérisé par** :
a) une station centrale pour une programmation, une émission et une transmission, par le biais d'un signal satellite, dans le but d'émettre deux signaux avec des messages publicitaires différents ;
b) un dispositif de réception installé dans des véhicules de transport public, comprenant un ordinateur dédié qui reçoit des signaux satellites par le biais d'une antenne spéciale, qui décode les signaux, et les reproduit à un format audio et à un format vidéo sur des écrans d'affichage ;
c) diverses stations-service spécialement équipées avec des ordinateurs qui peuvent communiquer avec l'ordinateur dédié installé dans le véhicule, au moyen d'un système de communication sans fil, de façon à recevoir toutes les informations relatives à des périodes d'affichage des messages, et de façon à convertir par la suite lesdites données en des crédits de combustible pour le véhicule en question, ainsi que pour relayer les rapports de périodes d'affichage vers la station centrale.

2. Système intégré pour afficher de façon électronique des annonces publicitaires sur des unités de transport public, selon la revendication 1, comprenant une station centrale pour une programmation et une transmission, à partir de laquelle deux messages publicitaires sont envoyés en même temps par le biais de signaux satellites codés vers les dispositifs de réception qui sont installés dans les véhicules de transport public.

3. Système intégré pour afficher de façon électronique des annonces publicitaires sur des unités de transport public, selon la revendication 1, comprenant un dispositif pour recevoir, décoder et reproduire des signaux satellites, destiné à être installé dans des véhicules de transport public, ledit dispositif comprenant une antenne spéciale pour capturer des signaux satellites et étant doté de la fonctionnalité d'utiliser un système de communication sans fil qui utilise des signaux de radio fréquence avec une puissance d'émission maximum de +20 dB (100 mW).

4. Système intégré pour afficher de façon électronique des annonces publicitaires sur des unités de transport public, selon la revendication 1, le dispositif de réception comprenant un ordinateur dédié pour gérer les signaux satellites, des messages publicitaires et pour afficher des rapports, ledit ordinateur contenant un ou plusieurs microprocesseurs, une mémoire RAM avec un programme BIOS, une mémoire FLASH, un port série de type UART, un système de communication sans fil, et la fonctionnalité de surveiller l'alimentation de puissance fournie par un système d'alimentation et de charge en énergie intelligent (figures 8 et 9).

5. Système intégré pour afficher de façon électronique des annonces publicitaires sur des unités de transport public, selon la revendication 1, le dispositif de réception comprenant des commandes d'un système d'affichage audio et vidéo qui permettent la sélection d'un canal pour chaque circuit de réception audio et vidéo, ainsi que la sélection de l'écran qui doit afficher un canal particulier, ainsi que la totalité des composants requis à cette fin : commande de réglage de gain pour les amplificateurs, détecteur audio, détecteur vidéo, dispositif de traitement audio et convertisseur numérique, dispositif de traitement vidéo et convertisseur numérique (figure 10).
